(19) Europäisches Patentamt
European Patent Office
Office européen des brevets

(11) Veröffentlichungsnummer: **0 489 055 B1**

# (12) EUROPÄISCHE PATENTSCHRIFT

(45) Veröffentlichungstag der Patentschrift: **02.11.94**

(51) Int. Cl.$^5$: **C08G 12/46**

(21) Anmeldenummer: **90912409.1**

(22) Anmeldetag: **22.08.90**

(86) Internationale Anmeldenummer:
**PCT/EP90/01399**

(87) Internationale Veröffentlichungsnummer:
**WO 91/02762 (07.03.91 91/06)**

## (54) KATIONISCHE HARNSTOFF-FORMALDEHYD-HARZE, VERFAHREN ZU IHRER HERSTELLUNG UND IHRE VERWENDUNG IN DER PAPIERINDUSTRIE.

(30) Priorität: **23.08.89 DE 3927812**

(43) Veröffentlichungstag der Anmeldung:
**10.06.92 Patentblatt 92/24**

(45) Bekanntmachung des Hinweises auf die Patenterteilung:
**02.11.94 Patentblatt 94/44**

(84) Benannte Vertragsstaaten:
**DE ES FR GB IT NL SE**

(56) Entgegenhaltungen:
**EP-A- 0 123 196**
**CH-A- 430 207**
**US-A- 3 275 605**
**US-A- 3 752 781**

(73) Patentinhaber: **BASF Aktiengesellschaft**
**Carl-Bosch-Strasse 38**
**D-67063 Ludwigshafen (DE)**

(72) Erfinder: **FLORY, Klaus**
**Im Schilling 2**
**D-6906 Leimen (DE)**
Erfinder: **STANGE, Andreas**
**Kantstrasse 8**
**D-6800 Mannheim 1 (DE)**
Erfinder: **KROENER, Michael**
**Eislebener Weg 8**
**D-6800 Mannheim 31 (DE)**
Erfinder: **SENDHOFF, Norbert**
**Auf der Wart 16**
**D-6718 Gruenstadt (DE)**

**EP 0 489 055 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft kationische Harnstoff-Formaldehyd-Harze, die Polymerisate mit Vinylamineinheiten einkondensiert enthalten, ein verfahren zu ihrer Herstellung und ihre Verwendung bei der Herstellung von Papier als Mittel zur Erhöhung der Trocken- und Naßfestigkeit von Papier.

Aus der US-PS 3 275 605 ist bekannt, Harnstoff und Formaldehyd in Gegenwart von Polyaminen zu wasserlöslichen Harzen zu kondensieren. Die Reaktionsteilnehmer werden zunächst im alkalischen pH-Bereich vorkondensiert, dann im sauren pH-Bereich bis zur beginnenden Gelbildung kondensiert, danach z. B. mit Formaldehyd einer Nachkondensation unterworfen und anschließend neutralisiert. Die Produkte eignen sich als Mittel zur Erhöhung der Naßfestigkeit von Papier.

Aus der US-PS 3 752 781 ist ein Verfahren zur Herstellung von kationischen Harzen bekannt, bei dem man zunächst Harnstoff mit Polyalkyleniminen, z. B. Polyethylenimin, unter Abspaltung von Ammoniak zu Polyharnstoffen umsetzt, die Polyharnstoffe anschließend mit Harnstoff reagieren läßt und das Reaktionsprodukt methyloliert. Man erhält ein kationisches Harz in Form einer wäßrigen Lösung, die durch Zugabe von Säure neutralisiert wird. Produkte dieser Art haben bisher keine Verwendung in der Papierindustrie gefunden, weil sie teuer und wenig wirksam sind und außerdem zu einer starken Vergilbung des Papiers führen.

Aus der EP-PS-0 123 196 ist ein Verfahren zur Herstellung von wasserlöslichen kationischen Harnstoff-Formaldehyd-Harzen bekannt, bei dem man Harnstoff und Formaldehyd im Molverhältnis 1:1,5 bis 3 in Gegenwart von Polyaminen kondensiert, wobei man die Mischung zunächst (a) bei pH-Werten von 8 bis 14 vorkondensiert, dann ansäuert und (b) bei pH-Werten von 1 bis 5 bis zur beginnenden Gelbildung kondensiert, danach (c) pro Mol des eingesetzten Harnstoffs 0,3 bis 1,5 Mol Formaldehyd zusetzt, (d) eine Nachkondensation durchführt und die Harzlösung anschließend neutralisiert. Als Polyamine werden dabei pro Mol Harnstoff im Endprodukt 5 bis 50 g Polyethylenimin, das 20 bis 15.000 Ethylenimin-Einheiten einpolymerisiert enthält, verwendet. Die so erhältlichen wasserlöslichen kationischen Harnstoff-Formaldehyd-Harze werden als Hilfsmittel bei der Herstellung von Papier zur Erhöhung der Trocken- und Naßfestigkeit des Papiers eingesetzt. Beim Trocknen der Papierbahnen, die diese Harze als Verfestiger enthalten, wird jedoch eine unerwünschte Abspaltung von Formaldehyd beobachtet. Die Formaldehyd-Abspaltung während des Trocknungsprozesses von Papier, das mit den aus der US-PS 3 275 605 bekannten Harnstoff-Formaldehyd-Harzen als Naßfestmittel ausgerüstet ist, ist dagegen noch weitaus stärker als bei Papieren, die Kondensationsprodukte der EP-PS 0 123 196 als Verfestigungsmittel enthalten.

Der vorliegenden Erfindung liegt die Aufgabe zugrunde, kationische Harnstoff-Formaldehyd-Harze zur Verfügung zu stellen, die die Trocken- und Naßfestigkeit von Papier erhöhen und diesen Papieren dabei die Eigenschaft verleihen, daß sie bei der Trocknung zu einer geringeren Formaldehyd-Emission Anlaß geben als die bisher hierfür verwendeten Kondensate auf Basis von Harnstoff und Formaldehyd. Die neuen Harze sollen außerdem bei der Papierherstellung eine geringere Weißabtrübung bewirken.

Diese Aufgaben werden erfindungsgemäß gelöst mit kationischen Harnstoff-Formaldehyd-Harzen, die erhältlich sind durch Kondensieren von Harnstoff und Formaldehyd im Molverhältnis 1 : 1,5 bis 3 in Gegenwart von mindestens 1 mol-% Vinylamineinheiten einpolymerisiert enthaltenden Polymerisaten mit K-Werten von 5 bis 300 (bestimmt nach H. Fikentscher in 5 %iger wäßriger Kochsalzlösung bei 25 °C in einer Polymerkonzentration von 1 Gew.-%) in einer Menge von 5 bis 50 g, bezogen auf 1 Mol Harnstoff im Endprodukt, wobei man die Mischung zunächst

a) bei pH-Werten von 8 bis 14 vorkondensiert, dann ansäuert und
b) bei pH-Werten von 1 bis 5 bis zur beginnenden Gelbildung kondensiert,
c) danach pro Mol des eingesetzten Harnstoffs 0,3 bis 1,5 Mol Formaldehyd zusetzt,
d) eine Nachkondensation durchführt und
e) die Harzlösung anschließend neutralisiert.

Die so erhältlichen Lösungen von kationischen Harnstoff-Formaldehyd-Harzen werden als Hilfsmittel bei der Herstellung von Papier zur Erhöhung der Trocken- und Naßfestigkeit des Papiers verwendet.

Harnstoff und Formaldehyd werden im Molverhältnis 1 : 1,5 bis 3 in Gegenwart von Vinylamineinheiten einpolymerisiert enthaltenden Polymerisaten kondensiert.

Vinylamineinheiten enthaltende Polymerisate sind bekannt, vgl. beispielsweise US-PS 4 421 602, US-PS 4 623 699, US-PS 4 255 548 und EP-A-0 216 387. Geeignete Vinylamineinheiten einpolymerisiert enthaltende Polymerisate werden vorteilhafterweise durch Hydrolyse von N-Vinylamiden einpolymerisiert enthaltenden Homo- und Copolymerisaten hergestellt. Solche Polymerisate enthalten folgende charakteristische Strukturen:

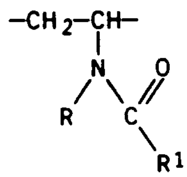

(I),

in der R, $R^1$ = H, $C_1$- bis $C_6$-Alkyl bedeuten.

Zur Herstellung von Verbindungen, die ausschließlich Struktureinheiten der Formel I enthalten, polymerisiert man z. B. N-Vinylformamid, N-Vinylacetamid, N-Vinyl-N-methylformamid, N-Vinylpropionamid oder N-Vinylbutyramid. Aus den Verbindungen mit Strukturelementen der Formel I entsteht durch Hydrolyse unter Verwendung von Säuren, z. B. Salzsäure, Schwefelsäure, Phosphorsäure oder unter Einwirkung von Basen, wie Natronlauge oder Kalilauge, unter Abspaltung der Gruppierung-CO-$R^1$ die Struktur:

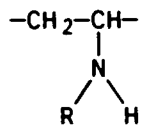

(II),

in der R = H, $C_1$- bis $C_6$-Alkyl bedeutet.

Bei einer 100 %igen Hydrolyse sämtlicher Einheiten der Struktur I im Polymerisat erhält man Polyvinylamin. Sofern nur eine partielle Hydrolyse durchgeführt wird, enthalten die aus den N-Vinylamiden hergestellten Polymerisate Einheiten der Strukturen I und II. Vorzugsweise wird als N-Vinylamid die Verbindung der Formel

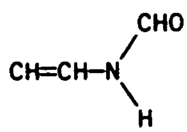

(III)

eingesetzt, d.h. N-Vinylformamid. Partiell hydrolysierte Homopolymerisate von Verbindungen der Formel III sind aus der obengenannten US-PS 4 421 602 bekannt. Die Hydrolyse kann, wie bereits erwähnt, 100 % betragen, so daß Polyvinylamin entsteht. Außerdem können als Vinylamineinheiten einpolymerisiert enthaltende Polymerisate Verbindungen eingesetzt werden, die durch Copolymerisieren von

A) 1 bis 99, vorzugsweise 10 bis 90 mol % N-Vinylamiden und

B) 99 bis 1 mol-% Vinylacetat, Vinylpropionat, $C_1$- bis $C_4$-Alkylvinylether, Ethylen, Ester, Nitrile oder Amide von Acrylsäure oder Methacrylsäure, N-Vinylpyrrolidon oder Mischungen und anschließende Hydrolyse der Amidgruppen der Struktureinheiten I der Polymerisate in Aminogruppen der Struktur II erhältlich sind.

Copolymerisate aus N-Vinylformamid mit den unter B) angegebenen Comonomeren sind bevorzugt. Solche Copolymerisate werden in der EP-A-0 216 387 beschrieben. Außer N-Vinylformamid kann man als Monomer der Komponente A) z. B. N-Vinyl-N-methylformamid, N-Vinylacetamid, N-Vinyl-N-methylacetamid, N-Vinylpropionamid oder N-Vinylbutyramid einsetzen. Bei der Hydrolyse von Copolymerisaten aus N-Vinylformamid und Vinylacetat oder Vinylpropionat können, je nach Reaktionsbedingungen, auch noch die einpolymerisierten Monomereinheiten B) hydrolysiert werden, so daß die Copolymerisate dann im Fall der zuletztgenannten Comonomeren zusätzlich z. B. Vinylalkohol-Einheiten einpolymerisiert enthalten. Diese Hydrolyse kann partiell oder vollständig durchgeführt werden.

Die Vinylamineinheiten einpolymerisiert enthaltenden Homo- und Copolymerisate haben K-Werte von 5 bis 300, vorzugsweise 15 bis 150. Besonders bevorzugt sind solche Polymerisate, die die Struktureinheiten der Formel II mit R = H enthalten und K-Werte von 20 bis 95 haben.

Die Struktureinheiten der Formel II enthaltenden Polymerisate werden bei der Kondensation von Harnstoff und Formaldehyd in einer Menge von 5 bis 50, vorzugsweise 10 bis 30 g, bezogen auf 1 Mol Harnstoff im Endprodukt, eingesetzt.

Vorzugsweise verwendet man bei der Herstellung der Kondensate auf 1 Mol Harnstoff 2,0 bis 2,5 mol Formaldehyd. Die Herstellung der wäßrigen Harzlösungen erfolgt in der Weise, daß man zunächst eine Mischung der obengenannten Komponenten herstellt. Sie liegt in Form einer klaren Lösung vor, die

alkalisch reagiert. Die Vorkondensation der Mischung aus Harnstoff, Formaldehyd und Vinylamineinheiten einpolymerisiert enthaltenden Polymerisaten gemäß der Stufe a) bei pH-Werten von 8 bis 14, vorzugsweise 9 bis 11 durchgeführt. Damit eine Reaktion eintritt, wird das Reaktionsgemisch auf 60 bis 100, vorzugsweise 70 bis 90 °C erhitzt. Die Vorkondensation richtet sich im wesentlichen nach der Temperatur der Reaktion und dauert etwa 10 Minuten bis zu 2 Stunden. Danach wird die wäßrige Lösung des Vorkondensats angesäuert und auf einen pH-Wert in dem Bereich von 1 bis 5 in Verfahrensschritt b) eingestellt. Zum Ansäuern der Reaktionslösung kann man Mineralsäuren oder organische Säuren verwenden, z. B. Schwefelsäure, Phosphorsäure, Salzsäure, Ameisensäure, Essigsäure, Propionsäure, p-Toluolsulfonsäure und Benzolsulfonsäure.

Gemäß Verfahrensstufe b) erfolgt die Kondensation bei pH-Werten in dem Bereich von 1 bis 5, vorzugsweise 2 bis 4,5 und Temperaturen zwischen 60 bis 100, vorzugsweise 70 bis 90 °C. Die Kondensation wird so weit geführt, bis eine Gelbildung zu beobachten ist. Die Gelbildung ist daran zu erkennen, daß sich am Rührer auch bei höheren Drehzahlen keine Thrombe mehr ausbildet, sondern das Reaktionsprodukt am Rührer hochsteigt. Für die Kondensationsreaktion benötigt man in Abhängigkeit von der Temperatur 15 Minuten bis zu 3 Stunden, wobei den hohen Temperaturen die kurzen Reaktionszeiten zuzuordnen sind.

Nachdem sich ein Gel gebildet hat, wird in der Verfahrensstufe c) Formaldehyd zu dem Kondensationsprodukt gegeben, wobei man auf 1 Mol des eingesetzten Harnstoffs 0,3 bis 1,5 Mol Formaldehyd zusetzt und gemäß Verfahrensstufe d) eine Nachkondensation in dem Temperaturbereich von 60 bis 100, vorzugsweise 70 bis 90 °C durchführt. Die Nachkondensation dauert je nach der dabei eingestellten Temperatur etwa 10 Minuten bis zu 5 Stunden. Gemäß der Verfahrensstufe e) wird die Harzlösung neutralisiert. Zur Neutralisation verwendet man beispielsweise Natronlauge, Kalilauge, Ammoniak, Amine, Soda, Kaliumcarbonat, Natriumhydrogencarbonat oder Ammonium- oder Kaliumhydrogencarbonat oder auch Gemische aus zwei oder mehreren Basen. Vorzugsweise verwendet man zur Neutralisation Soda. Die gebrauchsfertige wäßrige Harzlösung hat nach dem Neutralisieen pH-Werte von 6,0 bis 7,0.

Man erhält auf diese Weise wäßrige Lösungen von kationischen Harnstoff-Formaldehyd-Harzen mit einem Feststoffgehalt von 20 bis 70, vorzugsweise 25 bis 45 Gew.-%. Der Feststoffgehalt der Lösungen kann leicht dadurch variiert werden, daß min bei der Kondensation wäßrige Formaldehydlösungen einer unterschiedlichen Konzentration oder para-Formaldehyd einsetzt. Die bei der Kondensation erhaltenen neutralen wäßrigen Lösungen von kationischen Harnstoff-Formaldehyd-Harzen können direkt oder gegebenenfalls nach einem Verdünnen mit Wasser zur Herstellung von Papier verwendet werden. Ebenso ist es möglich, daß Harz selbst durch Abdestillieren des Lösemittels in fester Form zu gewinnen. Die kationischen Harnstoff-Formaldehyd-Harze sind in jedem beliebigen Verhältnis mit Wasser verdünnbar.

Man erhält wasserlösliche kationisch modifizierte Harnstoff-Formaldehyd-Harze, die in Form einer 25 gew.-%igen wäßrigen Lösung bei einer Temperatur von 20 °C Viskositäten von 20 bis 1500 mPas haben. Die wäßrigen Harzlösungen bzw. die daraus gewonnenen Festprodukte werden als Hilfsmittel bei der Herstellung von Papier zur Erhöhung der Trocken- und Naßfestigkeit von Papier verwendet. Die Harze werden in Form wäßriger Lösungen dem Papierstoff vor der Blattbildung zugesetzt oder auch mit Hilfe der Leimpresse auf ein bereits gebildetes Papierblatt aufgetragen. Die Anwendungsmengen betragen, bezogen auf trockene Fasern, 0,1 bis 5, vorzugsweise 0,5 bis 2 Gew.-% (fest) des kationisch modifizierten Harnstoff-Formaldehyd-Harzes. Die wäßrigen Harzlösungen werden bevorzugt dem Papierstoff vor der Blattbildung zugefügt. Sie bewirken bei allen in der Papierfabrikation verwendeten Faserstoffen eine Erhöhung der Trocken- und Naßfestigkeit des Papiers. Sie werden beispielsweise bei gebleichtem und ungebleichtem Zellstoff, Holzschliff, Altpapier, CTMP und TMP oder in Mischungen von Papierstoffen angewendet. Der Vorteil der kationisch modifizierten Harnstoff-Formaldehyd-Harze liegt gegenüber vergleichbaren Mitteln des Standes der Technik darin, daß sie die Weiße des Papiers nur geringfügig abtrüben und beim Trocknen der Papierblätter eine deutlich geringere Formaldehydemission aufweisen.

Die K-Werte wurden nach H. Fikentscher, Zellulosechemie, Band 13, 48 bis 64 und 71 bis 74 (1932) in 5 %iger Kochsalzlösung bei 25 °C und einer Polymerkonzentration von 1 Gew.-% bestimmt; dabei bedeutet $K = k \cdot 10^3$. Die in den Beispielen angegebenen Teile sind Gewichtsteile, die Angaben in % beziehen sich auf das Gewicht der Stoffe, sofern nicht anderes angegeben ist.

Beispiel 1

565 Teile (7,5 Mol) Formaldehyd als 40 %ige wäßrige Lösung, 220 Teile (3,7 Mol) Harnstoff und 190 Teile Wasser wurden mit 39,6 Teilen einer 42 %igen wäßrigen Lösung eines partiell verseiften Homopolymerisats des N-Vinylformamid, das 26 Teile Vinylaminhydrogensulfat- und 74 Teile Vinylformamid-Einheiten einpolymerisiert enthielt, gemischt und unter Rühren auf eine Temperatur von 70 °C erwärmt. Der K-Wert

des nichthydrolysierten Polyvinylformamid betrug 30, der K-Wert des hydrolysierten Polymerisats 28.

Nachdem man die Mischung 30 Minuten bei 70 ° C gerührt hatte, gab man Ameisensäure zu, bis sich ein pH-Wert von 4,0 einstellte. Bei diesem pH-Wert und einer Temperatur von 70 ° C wurde das Reaktionsgemisch bis zur beginnenden Gelierung kondensiert. Die Gelierung war daran erkenntlich, daß das Reaktionsgemisch am sich drehenden Rührer hochstieg. Die beginnende Gelierung ist mit einem sehr starken Anstieg der Viskosität der Harzlösung verbunden. Die Kondensation dauerte ca. 2 Stunden. Im Anschluß an die Hauptkondensation wurde ein Gemisch aus 137 Teilen (1,8 Mol) Formaldehyd als 40 %ige wäßrige Lösung, 30 Teilen Wasser und 50 Teilen Methanol zugesetzt und durch Zufügen von 20 %iger Sodalösung ein pH-Wert von 5,8 eingestellt. Bei diesem pH-Wert wurde dann 1 Stunde bei 70 ° C nachkondensiert. Die Harzlösung wurde anschließend auf einen pH-Wert von 6,2 eingestellt. Man erhielt eine ca. 30 % Feststoffe enthaltende wäßrige Lösung eines mit einem Vinylamin- und N-Vinylamid-Gruppen enthaltenden Copolymeren modifizierten Harnstoff-Formaldehyd-Harzes. Diese wäßrige Lösung des Harzes hatte eine Viskosität von 86 mPas.

Vergleichsbeispiel

Gemäß den Angaben in der EP-PS 0 123 196 wurden 565 Teile (7,5 Mol) Formaldehyd als 40 %ige wäßrige Lösung, 220 Teile (3,7 Mol) Harnstoff und 190 Teile Wasser mit 50 Teilen einer 50 %igen Lösung von Polyethylenimim, das 35 Ethylenimin-Einheiten einpolymerisiert enthielt, gemischt und unter Rühren auf eine Temperatur von 70 ° C erwärmt. Nachdem die Mischung 30 Minuten bei dieser Temperatur gerührt worden war, wurde der pH-Wert des Gemisches durch Zugabe von Ameisensäure auf 4,3 eingestellt. Bei diesem pH-Wert und einer Temperatur von 70 ° C kondensierte man das Reaktionsgemisch zur beginnenden Gelierung. Die Kondensation dauerte ca. 2 Stunden. Im Anschluß and die Hauptkondensation wurde ein Gemisch aus 151 Teilen (2,0 Mol) Formaldehyd als 50 %ige wäßrige Lösung, 4 Teilen Ethylendiamin, 30 Teilen Wasser und 50 Teilen Methanol zugesetzt und mit 20 %iger wäßriger Sodalösung ein pH-Wert von 5,8 eingestellt. Dann wurde das Reaktionsgemisch 1 Stunde bei 70 ° C nachkondensiert. Man stellte den pH-Wert der harzigen wäßrigen Lösung des mit Polyethylenimin modifizierten Harnstoff-Formaldehyd-Harzes auf 6,2 ein. Man erhielt eine 35 % Feststoffe enthaltende wäßrige Lösung.

Beispiel 2

Beispiel 1 wurde mit der einzigen Ausnahme wiederholt, daß man eine 39 %ige wäßrige Lösung eines partiell verseiften N-Vinylformamidpolymerisats einsetzte, die 45 Teile Vinylaminhydrogensulfat- und 55 Teile N-Vinylformamid-Einheiten enthielt. Man erhielt eine ca. 30%ige wäßrige Lösung eines mit einem partiell hydrolysierten N-Vinylformamidpolymerisat modifizierten Harnstoff-Formaldehyd-Harzes. Diese wäßrige Lösung des Harzes hatte ein Viskosität von 130 mPas (gemessen bei 20 ° C; Brookfield 20 U/min).

Beispiel 3

Beispiel 1 wurde mit der einzigen Ausnahme wiederholt, daß man als Vinylamineinheiten einpolymerisiert enthaltende Verbindung eine 30 %ige wäßrige Lösung eines Polyvinylamins vom K-Wert 28 einsetzte. Man erhielt eine 29 %ige wäßrige Lösung eines mit Polyvinylamin modifizierten Harnstoff-Formaldehyd-Harzes, die bei 20 ° C eine Viskosität (Brookfield, 20 U/min) von 146 mPas hatte.

Beispiel 4

Die gemäß den Beispielen 1 bis 3 und dem Vergleichsbeispiel erhaltenen wäßrigen Harzlösungen wurden als Hilfsmittel bei der Herstellung von Papier geprüft. Hierzu stellte man zunächst eine Suspension eines gebleichten Nadelsulfitzellstoffs mit einer Stoffdichte von 0,5 %, einem pH-Wert von 4,5 und einem Mahlgrad von 30 ° SR (Schopper Riegler) her. Zu dieser Faseraufschlämmung gab man dann jeweils die gemäß den Beispielen und dem Vergleichsbeispiel erhaltenen kationisch modifizierten Harnstoff-Formaldehyd-Harze in Form der wäßrigen Lösungen in einer Menge von 1 % (fest), bezogen auf trockenen Papierstoff, zu. Aus diesem Papierstoff wurden Blätter mit einer Größe von 283,5 $cm^2$ und einem Flächengewicht von 80 $g/m^2$ hergestellt. Die in der Tabelle angegebenen Eigenschaften wurden an den so erhaltenen Blättern gemessen.

Die Trockenreißlänge wurden nach DIN 53 112, Blatt 1 und die Naßreißlänge nach DIN 53 112, Blatt 2 bestimmt. Die Weiße der Papierblätter wurde mit Hilfe eines Reflektionsmeter (Elrepho) nach DIN 53 145 ermittelt. Der beim Trocknen der Blätter jeweils emittierte Formaldehyd wurde in Wasser aufgefangen und

colorimetisch bestimmt.

**Tabelle**

| Harz hergestellt gemäß Beispiel | Formaldehyd-Emission µg/Blatt | Trockenreißlänge in Meter | Naßreißlänge in Meter | Naßreißlänge nach Papieralterung (5 min 130°C) in Meter | Weißgrad % RG[1] |
|---|---|---|---|---|---|
| 1 | 119 | 2723 | 400 | 498 | 84,43 |
| 2 | 144 | 2694 | 433 | 562 | 83,68 |
| 3 | 146 | 2664 | 441 | 573 | 83,0 |
| Vergleichsbeispiel | 238 | 2736 | 483 | 681 | 82,58 |

1) RG = Remissionsgrad

## Patentansprüche

1. Kationische Harnstoff-Formaldehyd-Harze, dadurch gekennzeichnet, daß sie erhältlich sind durch Kondensieren von Harnstoff und Formaldehyd im Molverhältnis 1 : 1,5 bis 3 in Gegenwart von mindestens 1 mol-% Vinylamineinheiten einpolymerisiert enthaltenden Polymerisaten mit K-Werten von 5 bis 300 (bestimmt nach H. Fikentscher in 5 %iger wäßriger Kochsalzlösung bei 25 °C und einer Polymerkonzentration von 1 Gew.-%) in einer Menge von 5 bis 50 g, bezogen auf ein Mol Harnstoff im Endprodukt, wobei man die Mischung zunächst
   a) bei pH-Werten von 8 bis 14 vorkondensiert, dann ansäuert und
   b) bei pH-Werten von 1 bis 5 bis zur beginnenden Gelbildung kondensiert,
   c) danach pro Mol des eingesetzten Harnstoffs 0,3 bis 1,5 Mol Formaldehyd zusetzt,
   d) eine Nachkondensation durchführt und
   e) die Harzlösung anschließend neutralisiert.

2. Verfahren zur Herstellung von wasserlöslichen kationischen Harnstoff-Formaldehyd-Harzen durch Kondensieren von Harnstoff und Formaldehyd im Molverhältnis 1 : 1,5 bis 3 in Gegenwart von Polyaminen, wobei man die Mischung zunächst
   a) bei pH-Werten von 8 bis 14 vorkondensiert, dann ansäuert und
   b) bei pH-Werten von 1 bis 5 bis zur beginnenden Gelbildung kondensiert,
   c) danach pro Mol des eingesetzten Harnstoffs 0,3 bis 1,5 Mol Formaldehyd zusetzt,
   d) eine Nachkondensation durchführt und
   e) die Harzlösung anschließend neutralisiert,
   dadurch gekennzeichnet, daß man als Polyamin mindestens 1 mol-% Vinylamineinheiten einpolymerisiert enthaltende Polymerisate mit K-Werten von 5 bis 300 (bestimmt nach H. Fikentscher in 5 %iger wäßriger Kochsalzlösung bei 25 °C und einer Polymerkonzentration von 1 Gew.-%) in einer Menge von 5 bis 50 g, bezogen auf 1 Mol Harnstoff im Endprodukt, einsetzt.

3. Verfahren nach Anspruch 2, dadurch gekennzeichnet, daß man als Polyamine Vinylamin-Einheiten einpolymerisiert enthaltende Copolymerisate einsetzt, die durch Copolymerisieren von
   (A) 1 bis 99 mol-% N-Vinylamiden und
   (B) 99 bis 1 mol-% Vinylacetat, Vinylpropionat, $C_1$- bis $C_4$-Alkylvinylether, Ethylen, Ester, Nitrile oder Amide von Acrylsäure oder Methacrylsäure, N-Vinylpyrrolidon oder Mischungen
   und anschließende Hydrolyse der Amidgruppen der einpolymerisierten Einheiten (A) zu Aminogruppen erhältlich sind.

4. Verwendung der Harnstoff-Formaldehyd-Harze nach Anspruch 1 als Hilfsmittel bei der Herstellung von Papier Zur Erhöhung der Trocken- und Naßfestigkeit von Papier.

## Claims

1. A cationic urea/formaldehyde resin, which is obtainable by condensing urea and formaldehyde in a molar ratio of from 1 : 1.5 to 1 : 3 in the presence of polymers which contain not less than 1 mol % of polymerized vinylamine units and have K values of from 5 to 300 (determined according to H. Fikentscher in 5% strength aqueous sodium chloride solution at 25 °C and at a polymer concentration of 1% by weight), in an amount of from 5 to 50 g, based on one mole of urea in the end product, where the mixture is first
   a) precondensed at a pH of from 8 to 14, then acidified and
   b) condensed at a pH of from 1 to 5 until gel formation begins,
   c) then from 0.3 to 1.5 moles of formaldehyde are added per mole of urea used,
   d) post-condensation is carried out and
   e) the resin solution is subsequently neutralized.

2. A process for the preparation of a water-soluble cationic urea/formaldehyde resin by condensing urea and formaldehyde in a molar ratio of from 1 : 1.5 to 1 : 3 in the presence of polyamines, where the mixture is first
   a) precondensed at a pH of from 8 to 14, then acidified and
   b) condensed at a pH of from 1 to 5 until gel formation begins,
   c) then from 0.3 to 1.5 moles of formaldehyde are added per mole of urea used,

d) post-condensation is carried out and

e) the resin solution is subsequently neutralized,

wherein a polymer which contains not less than 1 mol % of polymerized vinylamine units and has a K value of from 5 to 300 (determined according to H. Fikentscher in 5% strength aqueous sodium chloride solution at 25 °C and at a polymer concentration of 1% by weight) is used as the polyamine, in an amount of from 5 to 50 g, based on 1 mole of urea in the end product.

**3.** A process as claimed in claim 2, wherein the polyamine used is a copolymer which contains polymerized vinylamine units and is obtainable by copolymerization of

(A) from 1 to 99 mol % of N-vinylamides and

(B) from 99 to 1 mol % of vinyl acetate, vinyl propionate, $C_1$-$C_4$-alkyl vinyl ethers, ethylene, esters, nitriles or amides of acrylic acid or methacrylic acid, N-vinylpyrrolidone or mixtures

and subsequent hydrolysis of the amide groups of the polymerized units (A) to give amino groups.

**4.** Use of a urea/formaldehyde resin as claimed in claim 1 as an assistant in papermaking for increasing the dry and wet strength of paper.

**Revendications**

**1.** Résines cationiques urée-formaldéhyde, caractérisées en ce qu'elles peuvent être obtenues par condensation d'urée et de formaldéhyde dans un rapport molaire de 1:1,5 à 3 en présence de polymères contenant en liaison polymère au moins 1% molaire de motifs vinylamine et ayant des valeurs K de 5 à 300 (déterminées selon H. Fikentscher dans une solution aqueuse à 5% de chlorure de sodium a 25 °C et à une concentration de polymère de 1% en poids) en une quantite de 5 à 50 g, par rapport à une mole d'urée dans le produit final, dans laquelle on effectue en premier lieu

a) une précondensation du mélange à des valeurs du pH de 8 à 14, puis on acidifie et

b) on condense à des valeurs du pH de 1 à 5 jusqu'à ce qu'un gel commence à se former,

c) puis on ajoute 0,3 a 1,5 mole de formaldéhyde par mole d'urée introduite,

d) on effectue une post-condensation et

e) on neutralise ensuite la solution de résine.

**2.** Procédé de préparation de résines cationiques hydrosolubles urée-formaldéhyde par condensation d'urée et de formaldéhyde dans un rapport molaire de 1:1,5 à 3 en présence de polyamines, dans lequel on effectue en premier lieu

a) une précondensation du mélange à des valeurs du pH de 8 à 14, puis l'on acidifie et

b) on condense à des valeurs du pH de 1 à 5 jusqu'à ce qu'un gel commence à se former,

c) on ajoute ensuite 0,3 à 1,5 mole de formaldéhyde par mole d'urée introduite,

d) on effectue une post-condensation et

e) on neutralise ensuite la solution de résine,

caractérisé en ce que l'on utilise, en tant que polyamine, des polymères contenant en liaison polymère au moins 1% molaire de motifs vinylamine ayant des valeurs K de 5 à 300 (déterminées selon H. Fikentscher dans une solution aqueuse à 5% de chlorure de sodium à 25 °C et à une concentration de polymère de 1% en poids) en une quantité de 5 à 50 g, par rapport à une mole d'urée dans le produit final.

**3.** Procédé selon la revendication 2, caractérisé en ce que l'on utilise, en tant que polyamines, des copolymères contenant en liaison polymère des motifs vinylamine, qui peuvent être obtenus par copolymérisation de

(A) 1 à 99% molaires de N-vinylamides et

(B) 99 à 1% molaires d'acétate de vinyle, de propionate de vinyle, d'éther vinylique d'alkyle en $C_1$-$C_4$, d'éthylène, d'ester, de nitriles ou d'amides de l'acide acrylique ou de l'acide méthacrylique, de N-vinylpyrrolidone ou de mélanges

et par hydrolyse subséquente des groupes amides des motifs (A) en liaison polymère en groupes amino.

**4.** Utilisation des résines urée-formaldéhyde selon la revendication 1 comme auxiliaires dans la fabrication de papier pour augmenter la résistance à sec et en milieu humide du papier.